Europäisches Patentamt

European Patent Office

Office européen des brevets

(19)

(11) Publication number: **0 166 177**
**B1**

(12) # EUROPEAN PATENT SPECIFICATION

(45) Date of publication of patent specification: **12.10.88**

(21) Application number: **85106076.4**

(22) Date of filing: **17.05.85**

(51) Int. Cl.⁴: **F 03 G 1/02,** F 15 B 1/04, B 60 G 13/14

(54) Oleoelastic energy accumulator.

(30) Priority: **25.06.84 IT 2158284**

(43) Date of publication of application:
**02.01.86 Bulletin 86/01**

(45) Publication of the grant of the patent:
**12.10.88 Bulletin 88/41**

(84) Designated Contracting States:
**DE FR GB SE**

(56) References cited:
**EP-A-0 071 112**
**DE-A-1 963 709**
**US-A-2 883 180**
**US-A-2 941 549**
**US-A-3 802 465**
**US-A-3 993 295**

(73) Proprietor: **INDUSTRIE PIRELLI S.p.A.**
**Piazzale Cadorna, 5**
**I-20123 Milan (IT)**

(72) Inventor: **Tangorra, Giorgio**
**Via Ramazzotti, 12**
**Monza - Milan (IT)**

(74) Representative: **Mariani, Giorgio, Dr. et al**
**INDUSTRIE PIRELLI S.p.A. Direzione Brevetti**
**Piazzale Cadorna, 5**
**I-20123 Milano (IT)**

EP 0 166 177 B1

Courier Press, Leamington Spa, England.

## Description

The present invention is directed towards an energy accumulator—and even more in particular, to an energy accumulator of the oleoelastic type, made of a polymeric material which is, in particular, elastically deformable when compressed through the action of a liquid.

As is already known, devices of various types are quite widely available, whereby one or more elements of an elasticially deformable polymeric material, in particular an of external forces for the purpose of accumulating energy and of restoring the same energy, when the cited forces are released.

A first type of such devices comprise one or more strip-like elastomeric elements, that are subjected to traction and consequently, elongated for absorbing energy.

A second type of such devices comprises one or more elastomeric elements that are deformed under compressive forces for accumulating energy.

The present application is directed to the second type of said cited devices, which will be referred to here from henceforth, as an "oleoelastic energy accumulator" that is deformed under compression.

Among the energy accumulators apt for absorbing energy, through the compression of the polymeric material, there is known one embodiment described in U.S. Patent No. 3,993,295 that, in the cylindrical casing, comprises: a plurality of polyurethane cones spaced apart by elastomeric guiding elements having a contrasted conicity.

At one extremity of the cylinder moreover, there is disposed a piston applied with one side facing the outermost cone in the row of cones, and with the piston's opposite side subjected to the action of a liquid whose thrust determines the compression of the cones—till the inversion of the conicity of said cones is caused on the cited guiding element.

In some instances this solution can present an excessive dissipation of energy, caused by the sliding of the cones along the guiding elements with the drawback of successively restoring not all—but just part of the energy accumulated.

Moreover, the presence of the guiding elements between one cone and the other, originates an assembly of a plurality of parts which—though not participating directly towards the accumulation of energy, under certain situations determine an incompatible overall dimension for the accumulator as far as regards the space available.

A further drawback of the "known solution" consists in the doubleness of the mechanisms necessary for the energy accumulator—since there is foreseen a first element—formed by a rigid-piston and by a liquid acting on one side of said rigid-piston for determining the compression-thrust, and a second element, for the real and proper accumulation, constituted by cones and by guiding elements that are spaced with respect to the elastomeric cones.

A further known embodiment—described in the U.S. Patent No. 2941549 comprises an accumulator formed by an annular member provided with a cap which acts under a pressure of fluid against a big block of elastomer associated for long tracts to the walls of a casing.

This device is highly stable and is not suitable for being used in all the application where it is desired to have, in an accumulator, volume variations substantially at constant fluid pressure.

Hence, the aim of the present invention is an oleoelastic energy accumulator functioning under compressive force, of the type that utilizes an elastically deformable polymeric material, and which is devoid of any of the previously cited drawbacks.

The object of the present invention is an oleolastic energy accumulator for absorbing energy through compression, of an elastomeric material comprising:

a rigid casing delimited by borders;

at least one deformable elastomeric membrane having a central zone and a peripheral zone, said membrane being tightly sealed to said borders of the casing for delimiting a closed space bound by said casing and said membrane, a liquid disposed inside said closed space, the said accumulator being characterized in that it comprises a membrane having a convex configuration curved inwardly towards said closed space and a conical external surface when in an at-rest position and a final flat configuration, said central zone and said peripheral zone having a wall thickness which is less than a wall thickness of a remaining portion of said membrane located between said central zone and said peripheral zone, said thickness of said remaining portion being between 0.3 and 0.6 times a distance between said central zone and said peripheral zone, said liquid, disposed in said closed space, *acting on one side only of said membrane*, and that it comprises means for limiting movement of said membrane, said membrane passing from said convex configuration, when at-rest to said final flat configuration by means of a gradual compression over its entire extension with a resultant accumulation of elastic energy when subjected to pressure from said liquid, and the said elastic energy is released when said pressure from said liquid is released.

Therefore, what constitutes a fundamental characteristic of the invention, is an elastically deformable polymeric membrane—forming the cover of a rigid casing, which is subjected to a liquid, on one of its curvilinear form faces, towards the casing's interior, that functions simultaneously, both as an element that is gradually deformable through compression—for accumulating energy, as well as like a piston for obtaining—through a variation of the volume inside the casing, the necessary pressure variation in the liquid, for thus accumulating energy.

In practice, the energy accumulator—according to the invention, acts as a container of a variable volume, that is occupied by an incompressible liquid, whereby the successive volume variations inside the casing translate into successive gradual stages for accumulating energy—in correspondance of the diverse geometrical configurations of the membrane, through the passage—from an initial, more or less convex curvilinear-form towards the liquid—till a final, substantially flat form.

The present invention will be better understood from the following detailed description, made solely by way of non-limiting example, with making reference to the figures of the attached drawing sheets, whereby:—

Fig. 1 shows a cross-section of the arrangement of an energy accumulator according to the invention;

Fig. 2 represents a particular embodiment of the means for fixing the membrane to the casing of the accumulator;

Fig. 3 schematically emphasizes the membrane of Fig. 1;

Figs. 4a and 4b, illustrate some stiffening means on the outer face of the membrane;

Fig. 5 illustrates an accumulator, provided with two membranes disposed opposite each other;

Fig. 6 represents the slope of the forces/movements curve of the membrane when it is mounted in a pre-compressed state;

Figs. 7 and 8, represent some alternative variations of the invention;

Fig. 9 represents the embodiment of Fig. 8 of the invention, that is apt for realizing great volume variations inside the rigid casing of the accumulator;

Fig. 10 is a section of Fig. 9, taken along the line X—X;

Fig. 11 represents a further embodiment of the membrane;

Fig. 12 shows with a curve, the volume variations and the consequent pressure variations in an embodiment of the accumulator—according to the invention, characterized by special ledge means for the outer surface of the membrane;

Fig. 13 shows the application of the present accumulator to a car suspension.

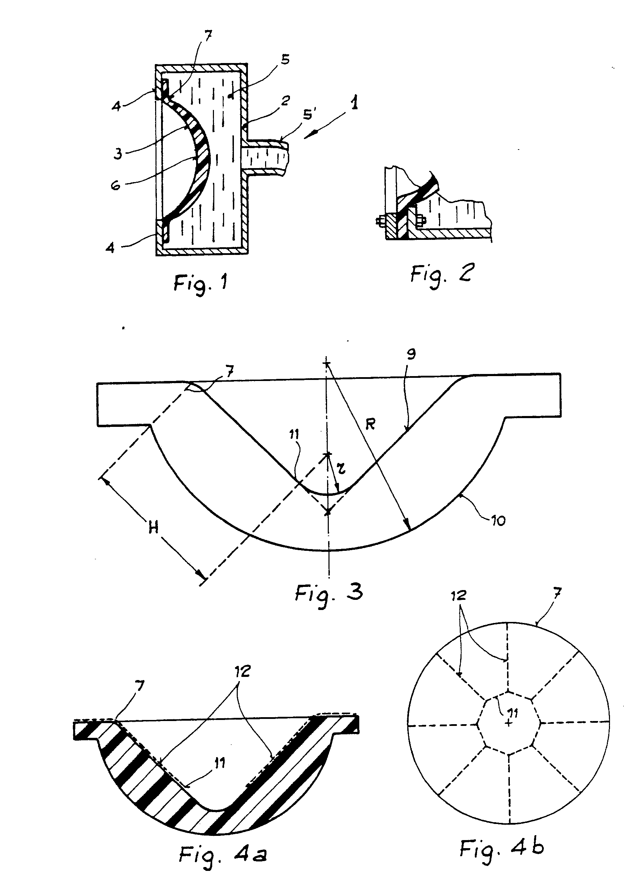

In its more general form, the oleoelastic energy accumulator 1 (Fig. 1) comprises: a rigid casing 2, an elastically deformable polymeric membrane 3, and a liquid—in particular an oil.

The membrane 3 is disposed, with a curvilinear form, towards the interior of the casing to whose borders 4 it is tightly sealed—for thus delimiting a closed space 5 occupied by the liquid.

The casing 1 is provided, in any whatsoever zone, with a hole connected to a conduit 5'—for the in-low of the liquid into the closed space.

On the conduit there can be provided an opportune valve (not shown) that is apt for controlling the in-flow of liquid.

In the cited solution and in all the other solutions of the invention, the liquid occupies the entire space that is delimited by the membrane, by the casing, and by the small in-flow tubes.

The membrane can be formed out of diverse polymeric materials which have a high deformability, and in particular, out of elastomers—for example, of polyurethane or nitrile rubber, or any other type of polymer that can present a proper oleo-resistent covering on its interior.

The choice of elastomeric material can be directed towards one based on rubber, or one having a high hysteresis—depending upon whether it is desired to have—for any particular application, respectively, a low hysteretic loss of energy, or a high hysteretic loss of energy.

The rigid type of casing, of steel or of a rigid plastic material, can assume diverse forms to those sketched in Fig. 1, and also have any whatsoever profile, and the borders 4 of the casing may assume any whatsoever configuration—provided that, no matter what solution is adopted, it provides a perfect sealing between membrane and borders.

One particular solution of bonding the membrane with the borders of the casing, would be the one relative to a bodying of the known rubber-to-metal type, or for the clamping between the parts—as is quite simply sketched in Fig. 2. The clamping, in many cases, could even be effectuated through mechanical operations—such as calking, or rolling on the coupling surface of the sealed flat metallic band.

The liquid used in the container can be an oil, whose viscosity is a function of the particular usage of the accumulator—i.e. it can be a liquid having either a high or a low viscosity respectively, should the applications of the accumulator require a low or a high dampening effect—in the presence of the cyclic oscillations exercised on the membrane.

The membrane, that is shown very schematically in Fig. 1, is characterized by the fact of comprising thicknesses in correspondance of the zones, respectively the central 6 and peripheral 7, having a lesser value relative to the rest of the membrane parts.

Said zones having lesser thicknesses, are destined to form the real and proper hinges when the membrane passes from its at-rest configuration to the final one. In practice, according to the embodiment illustrated in Fig. 3, the membrane comprises an external surface 9 having a conical form, and an inner spherically shaped surface 10 with radius $R$.

Said conical and spherical configuration—between the two surfaces, is apt for determining a hinge-zone at the centre of the membrane.

The membrane sketched in Fig. 3, is further characterized by the fact of comprising a maximum thickness at the point between the central zone 11 and the peripheral zone of the edge 7, that is comprised between 0.3 and 0.6 times the distance $H$, between the cited central and peripherical zones.

The central zone 11 is indicated by the point of tangency between the conical surface and the central circular zone of connection having a radius $r$.

In one example, the maximum thickness of the membrane is about one half of the length $H$.

As an alternative to the previous solution, the accumulator can comprise a membrane formed by an outer surface—having the form of a dihedral angle, radiused in the centre and an internal, substantially cylindrical surface.

In a further realization, the accumulator can comprise (Fig. 4a) stiffening means 12, disposed substantially on the outer concave face of the membrane, in the proximity of the border of the casing—i.e. between the boundary limit 11 of the central zone and the border zone.

These stiffening means could be embedded in the proximity of the outermost face of the membrane.

The stiffening means have the purpose of preventing any state of tractional stress of the rubber on the outer portion of the membrane, whenever the membrane moves—under the thrust of the liquid, from the curvilinear configuration of Fig. 1, to the successive configurations.

In the realizable forms, said stiffening means can comprise wires, or other similar inextensible longiform elements that are directed substantially towards the centre of the membrane—for example: the KEVLAR textile threads, or nylon or polyester fibres, or even thin metallic wires having a thickness of 0.2 mm.

As an alternative, said stiffening means can be formed out of fabrics, having, in general, a form like a netting, or with a similar configuration to that illustrated in the frontal view of the membrane as shown in Fig. 4b.

The functioning principle of the accumulator is based upon the thrust exercised by the pressurized liquid against the inner face of the membrane, with the consequent accumulation of energy due to the fact that the membrane, for passing from the curvilinear configuration to the successive configurations—going towards the final one, is forced to become compressed with, in this manner, accumulating energy elastically.

The above stated functioning principle—for the accumulator of Fig. 1, is valid for further solutions whereby, for example, the accumulator can comprise several membranes.

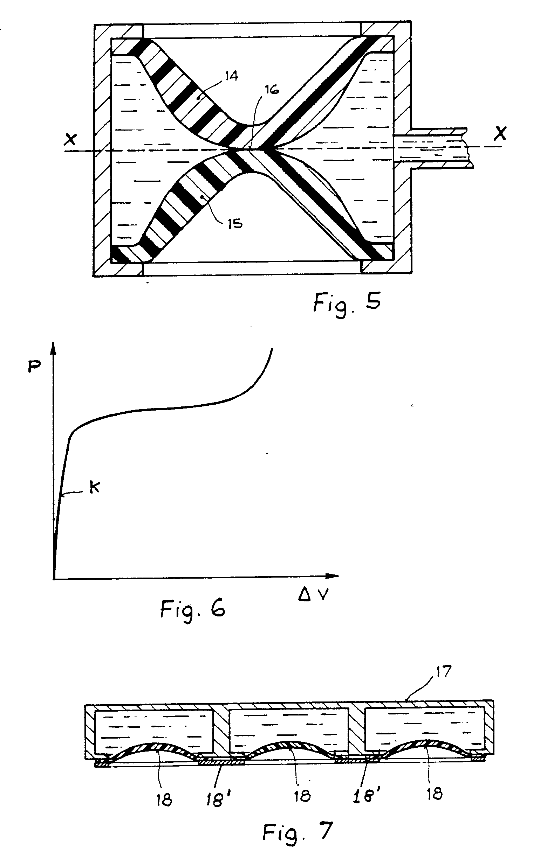

This last solution is shown schematically in Fig. 5, where two membranes 14 and 15 that are symmetrical with respect to a plane X—X, are shown. Therefore, in this last solution, the rigid casing comprises only the lateral walls and it still has the double function of fixing the borders of the two oppositely disposed membranes and of containing the liquid.

Preferably both, the membrane of Fig. 1 as well as the two membranes of Fig. 5, are applied and mounted in a precompressed state, with being in contact along the central zone 16—i.e. for obtaining a considerably initial slant $K$ of the membrane, as is shown in the diagram of the curve of Fig. 6—where, in the abscissa, there is shown the volume variation $\Delta V$, of the accumulator and, in ordinate, the pressure $P$ of the liquid, to which obviously corresponds a certain state of energy accumulation. Said mounting technique can be usefully applied even when using cylindrical membranes—in which case said Fig. 5 has to be interpreted as a cross-section to the axis of the cylinders.

In Fig. 7 there is illustrated an accumulator comprising a single container 17, provided with a cover—formed by several cap-shaped membranes 18 spaced apart by metallic plates 18'. The structure is distinguished by a plurality of chambers—either communicating or not with one another, depending upon whether a solution, is chosen where the liquid, apt for determining the thrust of the membrane, presses first upon a single membrane, and then—through special valves controlled from the outside, upon the other membranes—with, in this way, passing fron one chamber to the other. Otherwise, in another solution, the liquid presses simultaneously against all the membranes—since the chamber are in direct communication with each other.

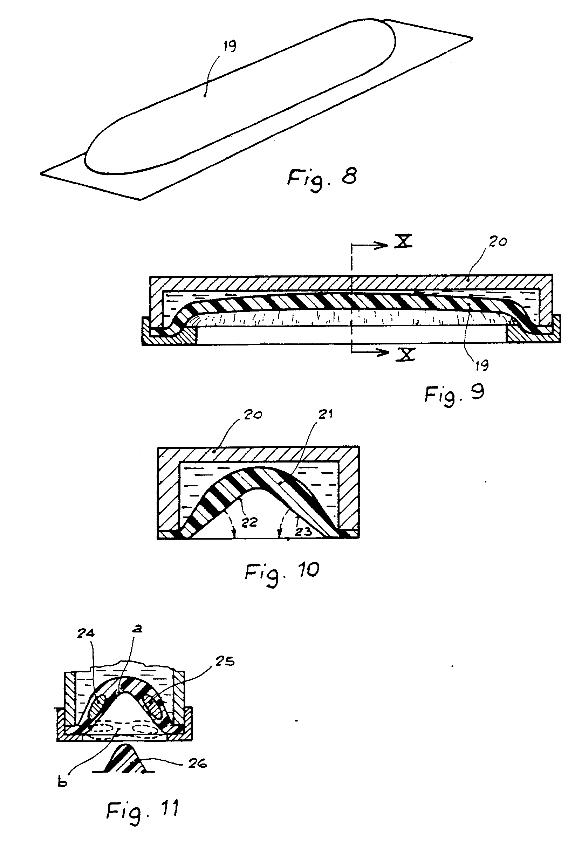

In Figs. 8 and 9, there is represented a solution wherein the accumulator—according to the invention, comprises a single elastomeric membrane 19 forming the cover of the cylindrical casing 20, whose cross-section is visible in Fig. 10.

This solution is particularly apt in instances where considerable volume variations are desired during the passage from the at-rest configuration 21 to a successive configuration—whereby the walls 22, 23 (Fig. 10) are directly opposed to each other, till becoming aligned along a substantially flat plane.

Fig. 11 represents a further alternative variation of the invention, whereby the membrane comprises inside it, harder elements 24, 25, with respect to the rest of the elastomeric part of the same membrane. These elements can be continuous metallic elements, or rigid plastic elements, or even a suitable compound that is harder with respect to the remaining elastomeric portion of the membrane.

In this solution, when the liquid pushes against the membrane, a phase is had of the successive positionings of the membrane, from the position shown with a full-line—to the final position shown with a broken-line in Fig. 11.

The area, inside the two lines indicated with *a* and *b*, represents the increase in the space at the disposal of the liquid.

During the volume variation of the container that collects the liquid, it is verified that the membrane—thanks to the presence of the harder elements inside it, shifts—with squashing through force the zones comprised between the central-cap and between the hard elements and between these latter and the borders of the casing, with then returning to its starting position, when the liquid has ceased its pushing action, with a rapidity that is controlled by the contrasting resistances to any existing of the liquid, by the hydraulic circuit.

In practice, the presence of the hard elements favours the formation of the central and peripheral hinge-zones of the accumulator.

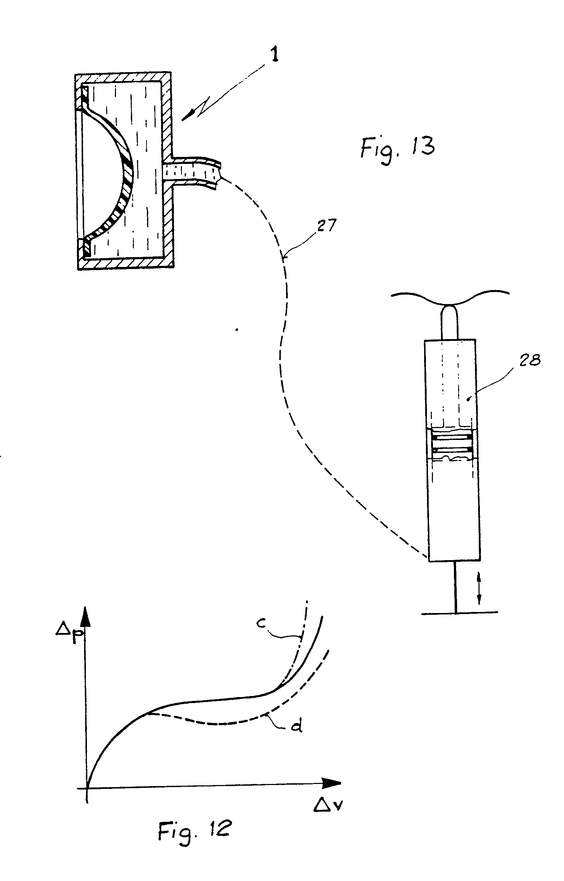

In relation to Fig. 11, the qualitative lay-out of a curve that can represent the accumulation of energy obtained by the system, is drawn in Fig. 12. The curve is sketched to show, in the abscissa, the volume variations of the liquid and in ordinate, the pressure variations.

In relation to the solution shown in Fig. 11, there are quite schematically drawn special means 26, for limiting the movement of the membrane—upto a substantially flat position relative to the starting position.

These means, in any whatsoever form of realization, can be constituted by a stopping surface made solidal, in any whatsoever way, with the casing.

The presence of the means 26, allows for determining with small variations in the volume of the liquid, considerable pressure variations—hence, a decided mounting upwards of the curve shown in Fig. 12—pointed out with the broken-line lay-out c.

The oleoelastic energy accumulator of the present invention, can find use in combination with other systems, for example, in the automotive field—for servo-brakes, for power-steering, for friction control, and such like.

A further usage of the invention is had in the urban water-supply network, for absorbing the unexpected variations in the hydraulic pressure.

Still another example for the application of the invention, is that relative to the field of industrial transports—such as, for example: motorbuses, trucks, and the like.

In this latter solution, the accumulator—according to the invention, is connected to the braking system. In particular, according to one solution, at the moment of braking, it is possible to determine the opening of a valve that—through a conduit controlled by said valve, allows for sending pressurized liquids—through the means of an oleodynamic control, towards the interior of the casing of Fig. 1, with causing a bending through compression, during the passage of the membrane from its initial configuration to its final one—with consequently allowing for energy to be accumulated.

Successively, the accumulated energy can be restored—either, through a special transducer mechanism, for determining the starting of the vehicle's engine, or even for allowing to operate devices for the shutting of car-doors, actioning car direction-indicators, and other controls.

The invention finds use as a centralizing element in a suspension either of engines or in entire vehicles. In this solution (Fig. 13), the space (already indicated in the previous Figures) existing inside the accumulator-casing, is occupied by oil—and this latter, again through the means of a flexible, non-expanding small-tube 27, is connected to a shock-absorber group—for example, of the type used in the "McPherson" automobile suspensions—formed, as is known, by a cylinder-piston unit 28, circumscribed by a spring and provided at one extremity by a buffer or block for the end-of-stroke limit.

In this solution—that links the cited suspensions to the accumulator of the invention, what takes place is that—in the presence of any obstacle on the ground, the variation in the disposition of the wheel acts upon the cylinder-piston system of the "McPherson" group, and forces the liquid that is contained in the cylinder-piston group, to exercise pressure variations upon the elastomeric membrane contained in the accumulator according to the invention.

This solution can be adopted for determining a more or less high damping effect of the oscillations, on the basis of the pre-chosen viscosity for the liquid.

As an alternative to what is known in the McPherson suspension, in the present invention the metallic spring, that is disposed around the cylinder-piston, unit, can be omitted. In fact, in such a case the elastic return carried out by the steel spring, is quaranteed by the elasticity of the accumulator.

A system for accumulating energy—as is described and illustrated in the Figs. from 1 to 13, can be adopted for diverse usages, in particular for those usages where considerable pressure variations are required.

According to one example, the membrane can be subjected to pressures of up to 10 atmospheres and over, and receive thrusts of a considerable entity as a function of the total surface forming the casing cover.

As is comprehensible, in all these solutions, the thickness of the rubber is chosen in such a way as not to be subjected, during the deformation, to buckling under the critical load—i.e. in such a way as to prevent that— owing to insufficient thicknesses, the variation of the liquid in the casing is manifested—not with the pressure increases——but instead, with the negative pressure variations, as is shown by the broken-line d of Fig. 12.

The invention achieves its prefixed scope. In fact, the energy accumulator is put into effect without having throughout its course, any whatsoever rubbing between the elastomeric membrane and the walls of the casing.

It is clear that, during its functioning, the membrane-passes from its initial at-rest configuration to a final, substantially flat configuration—through gradually being compressed, from the zone of the peripheral edge to the central zone—for its entire extension. In practice, with an effect comparable to that of a cylindrical helicoidal spring which is compressed between its two extremities.

In other words, during the phase of accumulating or discharging energy, the membrane acts by itself—with leaving for the other parts of the device the task of hermetically blocking the extremities and of containing the pusher liquid.

Therefore, since no phenomena of friction is verified between the diverse parts of the device in movement, it is not possible to have any remarkable dissipation phenomena—and hence, a high output for the accumulator is determined.

Moreover, in the membrane, the present oleoelastic energy accumulator comprises both, the element apt for storing or for releasing energy, as well as the element directly subjected to the deforming thrust of the liquid for accumulating or returning energy. Therefore, in the present accumulator, the liquid-membrane combination in practice, constitutes a unique and single group, devoid of any whatsoever other mechanical thrusting means, as could, for example, be had with the solution of the state of the art—whereby the elastically deformable part—for example, constituted by a piston that is, in its turn, actioned by a liquid.

Consequently, even the overall dimensions of the accumulator of the invention, can assume very reduced values—and such as to be opportunely utilized for diverse cases.

In fact, as is comprehensible, the membrane-liquid configuration of the present accumulator allows—through opportunely varying the selecting the extension of the membrane surface, for transducing the pressures of the liquid, to quite high thrust values leaving the accumulator with a substantially flat form—hence, with its being simple to apply to already existing structures.

Other advantageous aspects of the invention obviously originate from the characteristic combination of a membrane-liquid group. In practice, the two cited elements are in practice closely connected and a variation of one transduces in an immediate variation of the other.

In other words, in particular with regard to the liquid having a low viscosity—for example, water and glycol in equal percentages, the system acts like a metallic spring and, as such, immediately restores what has been accumulated, as soon as the deforming cause is left off.

## Claims

1. An oleoelastic energy accumulator for absorbing energy through compression, of an elastomeric material comprising:

a rigid casing (2) delimited by borders (4);

at least one deformable elastomeric membrane (3) having a central zone (6) and a peripheral zone (7), said membrane being tightly sealed to said borders of the casing for delimiting a closed space bound by said casing and said membrane, a liquid disposed inside said closed space, the said accumulator being characterized in that it comprises a membrane having a convex configuration curved inwardly towards said closed space and a conical external surface when in an at-rest position and a final flat configuration, said central zone (6) and said peripheral zone (7) having a wall thickness which is less than a wall thickness of a remaining portion of said membrane located between said central zone and said peripheral zone, said thickness of said remaining portion being between 0.3 and 0.6 times a distance (4) between said central zone and said peripheral zone, said liquid, disposed in said closed space, acting on one side only of said membrane, and that it comprises means (26) for limiting movement of said membrane, said membrane passing from said convex configuration when at-rest to said final flat configuration by means of a gradual compression over its entire extension with a resultant accumulation of elastic energy when subjected to pressure from said liquid, and the said elastic energy is released when said pressure from said liquid is released.

2. Oleoelastic energy accumulator, as in Claim 1, characterized in that, in its at-rest position, said member is already in a precompressed state.

3. Oleoelastic energy accumulator, as in any preceding claim, characterized in that it comprises stiffening means (12) that are disposed substantially on the outer face of the membrane, in the proximity of the casing border.

4. Oleoelastic energy accumulator, as in Claim 1, characterized in that it comprises hard elements (24 and 25) embedded in the membrane material comprised between the central and the peripheral zones.

5. Oleoelastic energy accumulator, as in Claim 1, characterized in that it comprises two inwardly convex, elastomeric membranes (14 and 15), that are in contact with one another at the centre (16), and applied and maintained, one respecting the other, in a pre-compressed state.

6. Oleoelastic energy accumulator, as in Claim 1, applied to a suspension provided with a shock-absorbing oleodynamic piston-cylinder group (28), with or without an auxiliary metallic spring, characterized in that it comprises a connecting conduit (27), made of a flexible material, having an indeformable cross-section between the inner space of the casing (2) and the oleodynamic cylinder (29), said liquid in the accumulator of the oleodynamic cylinder, acting on said membrane for accumulating or for restoring the energy, as a function of the shifting of the piston inside the oleodynamic cylinder.

## Patentansprüche

1. Hydrospeicher zum Absorbieren von Energie durch Zusammendrücken eines elastomeren Matierals, umfassend

ein starres Gehäuse (2), welches durch Begrenzungen (4) begrenzt ist, und

wenigstens eine verformbare elastomere Membran (3), die eine mittlere Zone (6) und eine Umfangszone (7) aufweist und an den Begrenzungen des Gehäuses dicht abgeschlossen ist, um einen geschlossenen Raum zu begrenzen, der durch das Gehäuse und die Membran umgrenzt ist, wobei eine Flüssigkeit in den geschlossenen Raum vorgesehen ist, dadurch gekennzeichnet, daß der Speicher eine Membran aufweist, die eine konvexe Gestalt, die nach innen in richtung gegen den geschlossenen Raum gekrümmt ist und eine konische Außenfläche, wenn Sie sich im Ruhezustand befindet, und schließlich eine ebene Gestalt hat, die mittlere Zone (6) und die Umfangszone (7) eine Wanddicke haben, die geringer ist als eine Wanddicke eines verbleibenden Teils der Membran, der zwischen der mittleren Zone und der Umfangszone angeordnet ist,

die Dicke des verbleidenen Teiles zwischen dem 0,3 und 0,6 fachen einer Strecke (H) zwischen der mittleren Zone und der Umfangszone liegt, die in dem geschlossenen Raum vorhandene Flüssigkeit auf nur eine Seite der Membran wirkt, und daß der Speicher Mittel (26) zum Begrenzen von Bewegung der Membran aufweist, die Memrban, wenn sie von der Flüssigkeit einem Druck unterworfen wird, von der konvexen Gestalt im Ruezustand zu der letzten ebenen Gesalt übergeht mittels eines allmählichen Zusammendrückens über ihre gesamte Erstreckung mit sich daraus ergebener Speicherung von elastischer Energie, und die elastische Energie freigegeben wird, wenn der Druck der Flüssigkeit ausgehoben wird.

2. Hydrospeicher nach Anspruch 1, dadurch gekennzeichnet, daß der genannte Membran sich im Ruhezustand bereits in vorkomprimiertem Zustand befindet.

3. Hydrospeicher nach irgendeinem vorhergehenden Anspruch, dadurch gekennzeichnet, daß er Versteifungsmittel (12) aufweist, die im wesentlichen an der äußeren Fläche der Membran nahe der Gehäusebegrenzung angeordnet sind.

4. Hydrospeicher nach Anspruch 1, dadurch gekennzeichnet, daß er harte Elemente (24 und 25) aufweist, die in das Membranmaterial zwischen der mittleren Zone und der Umfangszone eingebettet sind.

5. Hydrospeicher nach Anspruch 1, dadurch gekennzeichnet, daß er zwei nach innen konvexe elastomere Membranen (14, 15) aufweist, die an der Mitte (16) miteinander in Berührung stehen und, aufeinander Rücksicht nehmend, in vorkomprimiertem Zustand angeordnet und gehalten sind.

6. Hydrospeicher nach Anspruch 1, angewendet bei einer Aufhängigung, die mit einer stoßdämpfenden hydrodynamischen oder öldynamischen Kolben-Zylinder-Gruppe (28) versehen ist, und zwar mit oder ohne eine metallene Hilfsfeder, dadurch gekennzeichnet, daß der Hydrospeicher eine Verbindungsleitung (27) aus biegsamen Material, welches einen unverformbaren Querschnitt hat, zwischen dem Innenraum des Gehäuses (2) und dem hydrodynamischen Zylinder (28) aufweist, und als Funktion der Verschiebung des Kolbens innerhalb des hydrodynamischen Zylinders die Flüssigkeit in dem Speicher des hydrodynamischen Zylinders auf die Membran wirkt, um Energie zu speichern oder wiederzugewinnen.

**Revendications**

1. Accumulateur hydraulique d'énergie qui absorbe de l'énergie par compression, d'un matériau élastomère comprenant:

un carter rigide (2) délimité par des rebords, au moins une membrane élastomère déformable (3) comprenant une zone centrale (6) et une zone périphérique (7), ladite membrane comportant an joint étanche avec lesdits rebords du carter pour délimiter un espace fermé délimité par ledit carter et ladite membrane, un liquide disposé à l'intérieur dudit espace fermé, ledit accumulateur étant caractérisé en ce qu'il comprend une membrane présentant une configuration convexe incurvée vers l'intérieur vers ledit espace fermé et une surface conique extérieure lorsqu'elle est en position de repos et une configuration finale plate, ladite zone centrale (6) et ladite zone périphérique (7) présentant une épaisseur de parois qui est moindre que l'épaisseur de paroi d'une partie restante de ladite membrane située entre ladite zone centrale et ladite zone périphérique, ladite épaisseur de ladite paroi restante étant égale à 0,3 à 0,6 fois la distance (H) entre ladite zone centrale et ladite zone périphérique, ledit liquide, disposé dans ledit espace fermé, agissant sur une seule face de ladite membrane, et en ce qu'il comporte des moyens (26) de limiter le mouvement de ladite membrane, ladite membrane passant de ladite configuration convexe au repos à ladite configuration finale plate au moyen d'une compression graduelle sur toute sa surface avec une accumulation résultante d'énergie élastique quand elle est soumise à la pression dudit liquide, et ladite énergie élastique est libérée quand ladite pression dudit liquide est libérée.

2. Accumulateur hydraulique d'énergie, selon la revendication 1, caractérisé en ce que dans sa position de repos la dite membrane est déjà dans un état précomprimé.

3. Accumulateur hydrqulique d'énergie, selon l'une quelconque des précédentes revendications, caractérisé en ce qu'il comprend des moyens de raidissement (12) qui sont disposés sensiblement sur la face externe de la membrane, à proximité des rebords du carter.

4. Accumulateur hydraulique d'énergie, selon la revendication 1, caractérisé en ce qu'il comprend des éléments durs (24 et 25) noyés dans le matériau de la membrane compris entre les zones centrale et périphérique.

5. Accumulateur hydraulique d'énergie, selon la revendication 1, caractérisé en ce qu'il comprend deux membranes élastomères (14 et 15) convexes vers l'intérieur, qui sont en contact l'une avec l'autre au centre (16), et appliquées et maintenues l'une par rapport à l'autre dans un état précomprimé.

6. Accumulateur hydraulique d'énergie, selon la revendication 1, appliqué à une suspension pourvue d'un groupe hydraulique cylindre-piston (28) qui absorbe les chocs, avec ou sans ressort mécanique auxiliaire, caractérisé en ce qu'il comprend un conduit de connexion (27), constitué de matériau flexible, présentant une section transversale indéformable, entre l'espace interne du carter (2) et le cylindre hydraulique (28), ledit liquide dans l'accumulateur du cylindre hydraulique, agissant sur ladite membrane pour accumuler ou restituer l'énergie, en fonction du déplacement du piston dans le cylindre hydraulique.

Fig. 1

Fig. 2

Fig. 3

Fig. 4a

Fig. 4b

Fig. 5

Fig. 6

Fig. 7

Fig. 8

Fig. 9

Fig. 10

Fig. 11

1

Fig. 13

27

28

$\Delta p$

c

d

$\Delta v$

Fig. 12

4